# FASCICULE DE BREVET EUROPEEN

(11) **EP 0 515 255 B1**
(45) Date de publication et mention de la délivrance du brevet: **26.11.1997**
(21) Numéro de dépôt: 92401345.1
(22) Date de dépôt: 15.05.1992
(51) Int. Cl.: F27D 17/00, C21C 5/52

(54) **Procédé et dispositif d'aspiration de gaz ou fumées dans un récipient métallurgique et four électrique muni d'un tel dispositif**
Verfahren und Einrichtung für das Absaugen von Gasen und Rauch von einem metallurgischen Gefäss und Einrichtung dafür
Process and device for the aspiration of fumes or gases from a metallurgical vessel and device therefor

(30) Priorité: 22.05.1991 FR 9106166; 22.05.1991 FR 9106169
(43) Date de publication de la demande: 25.11.1992
(73) Titulaire: UNIMETAL, F-57040 Metz Cédex 1 (FR)
(72) Inventeur: Pernet, Daniel, F-57050 Metz (FR); Blum, Jacques, F-57640 Argency (FR)
(74) Mandataire: Bouget, Lucien

(56) Documents cités:
- DE-A- 1 458 876
- GB-A- 1 152 886
- US-A- 4 450 569

## Description

L'invention est relative à l'aspiration de gaz ou de fumées dans un récipient métallurgique tel qu'un four à arc électrique.

On utilise, dans l'industrie métallurgique et en particulier en sidérurgie, des récipients métallurgiques tels que des fours électriques à arcs, dans lesquels on élabore des aciers ou alliages à partir de substances métallurgiques qui sont généralement à l'état liquide à l'intérieur du four, pendant l'élaboration. Les réactions chimiques qui se produisent à l'intérieur du récipient, avec ou sans apport de gaz réactifs ou de brassage, s'accompagnent d'un dégagement à débit variable dans le temps de fumées et de gaz qu'il est nécessaire d'évacuer de l'enceinte du récipient.

Dans le cas des fours électriques, le récipient est sensiblement clos et les gaz proviennent de la masse des substances métallurgiques à l'état fondu ou en cours de fusion.

Le débit des gaz ou fumées produits dans le four peut varier, au cours de l'élaboration, entre une valeur très faible et une valeur élevée.

Les gaz ou les fumées sont aspirés dans des dis- positifs connus comprenant généralement, dans le prolongement de l'étage d'émission, une chambre de combustion, des filtres, et un ventilateur, tous ces éléments étant reliés en série et dans cet ordre par des canalisations. La canalisation qui relie les filtres au ventilateur est munie d'un organe de réglage de la perte de charge commandé par une régulation pilotée par une mesure de pression dans l'enceinte du four au voisinage de la voûte de celui-ci. Cette régulation a pour but de maintenir la pression du four au voisinage de la pression atmosphérique extérieure afin de limiter soit les entrées d'air à l'intérieur du four, soit les émissions de gaz ou de fumées à l'extérieur du four.

Ces dispositifs ont des inconvénients :
- d'une part ils n'ont pas une plage de fonctionnement stable en débit suffisamment étendue en particulier vers les bas débits. Il faudrait en effet avoir tantôt de très grands débits, tantôt de très faibles débits et les sytèmes capables de très grands débits ne sont pas stables vers les très faibles débits,
- d'autre part, ils n'ont pas un temps de réponse suffisamment faible lorsqu'on doit passer d'un petit débit à un grand débit. Lorsqu'une bouffée de gaz ou de fumée doit être absorbée, pour que l'aspiration devienne importante à la sortie du four, il faut d'abord vider partiellement les filtres, la chambre de combustion et les canalisations afin de faire baisser la pression à l'entrée du dispositif d'aspiration. Celà peut prendre une trentaine de secondes, ce qui est très long.

Le FR-A-2.464.305 (INSTITUT DE RECHERCHES DE LA SIDERURGIE FRANCAISE - IRSID) propose un procédé et un dispositif d'aspiration de gaz d'un four à arc qui remédie partiellement à ces inconvénients. Ce procédé utilise un dispositif dans lequel l'étage d'émission est muni d'un organe de réglage de la perte de charge piloté par la pression dans le four ; la canalisation reliant la hotte à la chambre de combustion étant équipée d'un organe de réglage de la perte de charge pilotée par la pression à l'entrée de la hotte. Ce dispositif à double régulation de pression dans des endroits aussi proches l'un de l'autre sur le circuit d'évacuation des fumées peut conduire à une certaine instabilité, à l'occasion de variations brutales du régime de fonctionnement du four.

Le US-A-4.450.569 décrit un dispositif de réglage de la pression d'un gaz produit dans un four électrique à partir de mesures de pression et de température effectuées dans un conduit d'aspiration en remplacement de mesures effectuées dans le four. Les mesures sont traitées de manière à régler la pression dans le four. Un dispositif d'introduction de gaz additionnel dans le conduit d'aspiration en aval des moyens de mesure relié à une hotte de captage des fumées à la sortie du four permet de refroidir le gaz provenant du four. Un tel dispositif comportant un double système de captage présente l'inconvénient que la quantité de gaz additionnel introduit dans le conduit d'aspiration est généralement croissante avec la production de gaz par le four, ce qui augmente encore la quantité de gaz que le ventilateur doit extraire.

Le GB-A-1.152.886 décrit un dispositif d'aspiration comportant un moyen d'introduction d'air additionnel piloté par un détecteur de fumées situé au-dessus du four. On ajuste la quantité de gaz aspiré de manière à maintenir le four en légère surpression avec des fuites de gaz réduites au-dessus du four.

Le DE-A-1.458.876 décrit un dispositif de captage de gaz émis par un four à arc électrique comportant une seule ligne de captage constituée d'une hotte d'aspiration située en regard d'un étage d'émission du four, reliée par une conduite successivement à un filtre et à un ventilateur. Entre l'étage d'émission du four et la hotte est disposée une buse torique d'introduction d'air additionnel dans le gaz aspiré. L'introduction d'air additionnel est pilotée par une mesure de pression dans le four permettant de régler la buse et/ou le débit d'air dans une conduite d'alimentation de la buse.

L'introduction d'air additionnel permet à la fois de régler la perte de charge dans le courant de gaz capté par la hotte en fonction de la pression dans le four et de brûler le gaz capté qui contient des substances combustibles telles que le monoxyde de carbone. En revanche, l'introduction d'air additionnel, qui est réalisée en amont du filtre dans une zone éloignée de la partie d'aspiration du ventilateur et qui est réglée à partir d'une mesure de pression dans le four, ne permet pas d'assurer un fonctionnement stable du ventilateur. En outre, le réglage de la perte de charge dans la conduite d'alimentation de la buse est également piloté par la mesure de pression dans le four, de sorte que ce réglage n'apporte pas d'amélioration sensible en ce qui concerne le fonctionnement du ventilateur.

Les dispositifs selon l'art antérieur ne permettent pas de régler la pression dans la partie d'aspiration du ventilateur et le régime de fonctionnement du ventilateur, de manière que ce régime reste stable, quelles que soient les variations de la quantité de gaz produite dans le four.

Le but de l'invention est de proposer un procédé et un dispositif d'aspiration de gaz ou de fumées émis par un récipient métallurgique, tel qu'un four électrique à arc, qui puisse fonctionner sur une très large plage de débit, en particulier à très bas débit et à très haut débit, qui ait un temps de réponse court et des régimes de fonctionnement stables.

A cet effet, l'objet de l'invention est un procédé d'aspiration des gaz émis par un four métallurgique à arc électrique, à l'intérieur duquel des gaz sont produits en quantités variables au cours du temps, en particulier par la fusion et des réactions de transformation de substances métallurgiques, l'enceinte du four étant reliée à la partie d'aspiration d'un moyen de pompage par une ligne de captage de gaz, procédé dans lequel on brûle les gaz émis par le four avant de filtrer les fumées de combustion des gaz, on règle la perte de charge des gaz aspirés dans le four, avant leur combustion, à partir d'une mesure de pression dans le four et on introduit un courant de gaz additionnel dans la ligne de captage des gaz, caractérisé en ce qu'on introduit le courant d'air additionnel dans la ligne de captage de manière à le mélanger aux fumées de combustion des gaz après filtration, on mesure la pression de gaz dans la ligne de captage à proximité de la partie d'aspiration du moyen de pompage située en aval de la zone d'introduction d'air additionnel par rapport au sens d'écoulement des fumées de combustion, et on règle le débit d'introduction d'air additionnel de manière que la pression de gaz dans la partie d'aspiration du moyen de pompage soit maintenue à une valeur fixe correspondant à la valeur de la pression de gaz lorsque le moyen de pompage fonctionne au voisinage de son débit maximal, quelle que soit la quantité de gaz produite dans le four.

L'invention a également pour objet un dispositif de captage des gaz émis par un four à arc électrique qui comporte une enceinte dans laquelle on réalise la fusion et/ou la transformation d'une charge avec production de gaz et un étage d'émission de gaz à l'extérieur du four, en communication avec l'enceinte du four, le dispositif de captage comprenant une ligne de captage constituée d'une hotte d'aspiration située en regard de l'étage d'émission du four, une chambre de combustion des gaz, un filtre, un ventilateur, une première canalisation joignant la hotte d'aspiration et la chambre de combustion, une seconde canalisation joignant la chambre de combustion et le filtre et une troisième canalisation joignant le filtre à une partie d'aspiration du ventilateur ainsi qu'un premier organe de réglage de perte de charge disposé dans la première canalisation relié pour sa commande à un premier moyen de régulation relié pour son pilotage à un capteur de pression disposé dans l'enceinte du four, au voisinage de l'étage d'émission et des moyens d'introduction d'air additionnel dans la ligne de captage comportant un second organe de réglage de perte de charge, caractérisé en ce que les moyens d'introduction d'air additionnel comportent une canalisation additionnelle reliée à la troisième canalisation à l'une de ses extrémités et débouchant à l'air libre à son autre extrémité,
et en ce que le second organe de réglage de perte de charge est disposé dans la canalisation additionnelle et commandé par un second moyen de régulation relié, pour son pilotage, à un capteur de pression disposé dans la troisième canalisation, à proximité de la partie d'aspiration du ventilateur, le second moyen de régulation étant conçu pour piloter le second organe de réglage de manière à maintenir la pression à l'aspiration du ventilateur au voisinage de la pression correspondant au débit maximal dudit ventilateur.

Les organes de réglage de perte de charge peuvent être des vannes papillon ou des ventelles et le ventilateur peut être un ventilateur centrifuge.

La régulation de l'organe de réglage de perte de charge situé dans la première canalisation reliant la hotte de captage et la chambre de combustion maintient la pression à l'intérieur du four au voisinage de la pression atmosphérique à l'extérieur dudit four.

L'invention va maintenant être décrite en regard des figures énumérées dans lesquelles :
- la figure 1 est une vue schématique d'un dispositif pour mettre en oeuvre le procédé selon l'invention,
- la figure 2 est un diagramme débit/pression caractéristique du fonctionnement d'un système d'aspiration comprenant une canalisation avec vanne papillon et un ventilateur.
- la figure 3 représente de façon schématique un four à arc équipé d'un dispositif de captage selon l'invention.

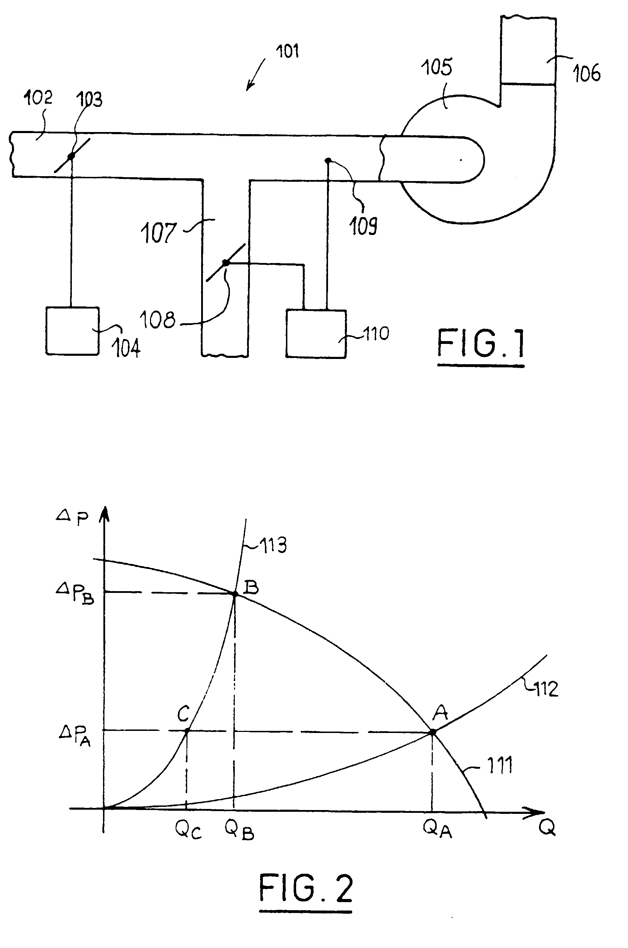

Le dispositif représenté généralement par 101 à la figure 1 comprend une conduite d'aspiration 102 munie par exemple d'une vanne papillon 103 dont la position est commandée par un régulateur 104. La conduite 102 est branchée à l'aspiration d'un ventilateur 105 refoulant dans une cheminée 106. Le ventilateur est par exemple un ventilateur centrifuge. Une conduite additionnelle 107 débouchant à l'air libre est branchée sur la conduite 102 entre la vanne 103 et le ventilateur 105. La conduite 107 est munie d'une vanne par exemple une vanne papillon 108 commandée par un régulateur 110 relié à un capteur de pression 109 situé au voisinage de l'aspiration du ventilateur 105.

Le principe de fonctionnement d'un tel dispositif peut être expliqué par référence au fonctionnement d'un système d'aspiration sans conduite additionnelle et en regard de la figure 2. On appelle Δp la perte de charge, soit entre l'amont et l'aval de la vanne 103, soit entre l'aspiration et le refoulement du ventilateur 105 ; on appelle Q le débit, soit dans la canalisation 102, soit dans le ventilateur.

Pour le ventilateur, le débit Q est relié à la perte de charge par une relation qui correspond à la courbe 111 de la figure 2.

Pour la canalisation 102, le débit et la perte de charge sont liés par une relation qui correspond aux courbes 112 et 113 de la figure 2. La courbe 112 correspond à la vanne 103 complètement ouverte ; la courbe 113 à la vanne 103 fermée au maximum admissible pour éviter les instabilités.

Lorsque la vanne 103 est complètement ouverte, le point de fonctionnement est A, intersection des courbes 111 et 112 et le débit est Q_{A} ; c'est la valeur maximale du débit admissible.

Lorsque la vanne 103 est presque fermée, en l'absence de canalisation 107, le point de fonctionnement est B ; il correspond à un débit résiduel Q_{B} non négligeable.

A l'aide de la canalisation 107 on peut maintenir la pression d'aspiration à une valeur constante ΔP_{A} correspondant au débit maximum du ventilateur. Pour cela, la régulation agit sur la vanne 108 de façon telle que la somme des débits passant par les canalisations 102 et 107 soit constante : lorsque la vanne 103 est grande ouverte, la vanne 108 est presque fermée et réciproquement.

Dans ces conditions, la perte de charge dans la vanne 103 reste constante et égale à ΔP_{A} si bien que, lorsque la vanne 103 est presque fermée, le point de fonctionnement devient C ; il correspond à un débit de fuite Q_{C} nettement plus faible que Q_{B}.

Le dispositif selon l'invention peut donc fonctionner sur une plage de débit comprise entre Q_{C} et Q_{A} qui est beaucoup plus étendue vers les débits faibles que la plage de fonctionnement des dispositifs selon la technique antérieure.

A titre d'exemple il est courant que ΔP_{A} soit de 100 mm de colonne d'eau et ΔP_{B} soit de 500 mm de colonne d'eau. Le débit dans la canalisation 2 variant comme la racine carrée de la perte de charge, avec le procédé selon l'invention on pourra atteindre des débits Q_{C}, = 0,45 Q_{B} et celà sans instabilité du papillon.

Le procédé selon l'invention consiste donc à aspirer les gaz ou fumées à l'aide d'un ventilateur 105 et à introduire, à l'aspiration du ventilateur 105, un débit d'air ou de gaz supplémentaire qu'on régule de façon à ce que la pression à l'aspiration du ventilateur reste faible et corresponde au débit maximum d'aspiration dudit ventilateur.

Ce procédé est particulièrement intéressant lorsqu'il est utilisé pour l'aspiration des fumées d'un four à arc électrique, notamment lorsqu'on cherche à réaliser un four étanche.

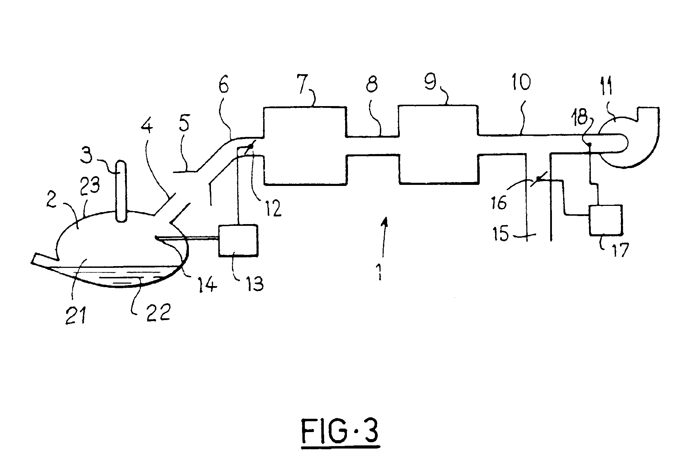

Pour celà, on utilise par exemple un dispositif tel que celui représenté à la figure 3.

Le four à arc 2 muni de trois électrodes de voûte 3 dont une seule est représentée, délimite une enceinte 21 (ou laboratoire) destinée à recevoir la charge métallique à fondre 22 et comporte un étage d'émission de gaz ou de fumées 4 constitué d'un trou dans la voûte 23 et d'un élément de canalisation. Ce four est équipé d'un dispositif de captation des fumées selon l'invention et repéré par la référence générale 1. Ce dispositif comporte une hotte 5 située en regard de l'étage d'émission 4. Cette hotte est reliée par une canalisation 6 à une chambre de combustion 7 reliée par une canalisation 8 à des filtres 9 reliés par la canalisation 10 à un ventilateur 11. La canalisation 6 est munie d'un organe de réglage de la perte de charge constitué par exemple par une vanne papillon ou par une ventelle. Cet organe 12 est commandé par une régulation 13 pilotée par un capteur de pression 14 situé dans le four, au voisinage de l'étage d'émission 4. Sur la canalisation 10 est connectée une canalisation additionnelle 15 d'aspiration d'air ouverte à l'atmosphère. Cette canalisation additionnelle est munie d'un organe de réglage de la perte de charge 16 constitué par exemple d'une vanne papillon ou d'une ventelle. Cet organe 16 est commandé par une régulation 17 pilotée par un capteur de pression 18 situé au voisinage de l'aspiration du ventilateur 11.

En fonctionnement :
- la régulation 13 ajuste la position de l'organe 12 de telle sorte que la pression dans le four reste au voisinage de la pression atmosphérique à l'extérieur du four ; en l'absence d'émission importante de gaz ou de fumée, l'organe 12 est presque fermé ; lorsqu'il y a émission importante de gaz, cet organe est ouvert en grand,
- la régulation 16 maintient la pression à l'aspiration du ventilateur au niveau correspondant au débit maximum du ventilateur ; celà correspond à un écart de pression avec la pression atmosphérique faible ; lorsque le débit provenant du four est faible, l'organe 16 est presque fermé et inversement.

Lorsque l'émission de gaz est faible, ce dispositif peut fonctionner de façon stable avec un débit très faible à l'aspiration de la hotte 5 et la pression en aval de l'organe 12 est faible ; la pression dans le four est maintenue au voisinage de la pression atmosphérique.

Si une bouffée de gaz ou de fumée apparaît brutalement, l'organe 12 s'ouvre brutalement. Comme la pression est faible dans la partie aval de la canalisation 6, dans la chambre de combustion 7, dans la canalisation 8, dans le filtre 9 et dans la canalisation 10, la bouffée de gaz ou de fumées est aspirée dans le dispositif 1, et le temps de réponse du four est très court. On a constaté des temps de réponse de 1 seconde contre 30 secondes pour les dispositifs classiques.

Lorsque le régime permanent est atteint, l'organe 12 est ouvert et l'organe 16 est fermé ; toute la capacité du ventilateur est utilisée pour extraire les gaz ou fumées émis par le four.

Il est clair que, en fin d'émission de gaz, l'organe 12 peut se refermer très rapidement et maintenir un débit d'aspiration à la hotte très faible, ce qui évite d'abaisser la pression dans le four ; progressivement l'organe 16 s'ouvre.

Le dispositif selon l'invention permet ainsi d'obtenir un fonctionnement stable sur une très large plage de débits à l'aspiration de la hotte ; son temps de réponse est très court. Ceci permet tout à la fois de bien réguler la pression dans le four, d'éviter les entrées d'air parasites, lorsque les émissions de gaz ou de fumées sont faibles et de bien aspirer les gaz ou les fumées lorsque leur production augmente brutalement.

## Revendications

1. Procédé d'aspiration des gaz émis par un four métallurgique à arc électrique, à l'intérieur duquel des gaz sont produits en quantités variables au cours du temps, en particulier par la fusion et des réactions de transformation de substances métallurgiques, l'enceinte du four étant reliée à la partie d'aspiration d'un moyen de pompage (105) par une ligne de captage, procédé dans lequel on brûle les gaz émis par le four avant de filtrer les fumées de combustion des gaz, on règle la perte de charge des gaz aspirés dans le four, avant leur combustion, à partir d'une mesure de pression dans le four et on introduit un courant de gaz additionnel dans la ligne de captage des gaz, caractérisé en ce qu'on introduit le courant d'air additionnel dans la ligne de captage, de manière à le mélanger aux fumées de combustion des gaz après filtration, on mesure la pression de gaz dans la ligne de captage à proximité de la partie d'aspiration du moyen de pompage (105) située en aval de la zone d'introduction d'air additionnel par rapport au sens d'écoulement des fumées de combustion et on règle le débit d'introduction d'air additionnel de manière que la pression de gaz dans la partie d'aspiration du moyen de pom-page soit maintenue à une valeur fixe correspondant à la valeur de la pression de gaz lorsque le moyen de pompage (105) fonctionne au voisinage de son débit maximal, quelle que soit la quantité de gaz produite dans le four.

2. Dispositif de captage des gaz émis par un four à arc électrique (2) qui comporte une enceinte dans laquelle on réalise la fusion et/ou la transformation d'une charge avec production de gaz et un étage d'émission (4) de gaz à l'extérieur du four, en communication avec l'enceinte du four, le dispositif de captage comprenant une ligne de captage constituée d'une hotte d'aspiration (5) située en regard de l'étage d'émission (4) du four (2), une chambre de combustion (7) des gaz, un filtre (9), un ventilateur (11), une première canalisation (6) joignant la hotte d'aspiration (5) et la chambre de combustion (7), une seconde canalisation (8) joignant la chambre de combustion (7) et le filtre (9) et une troisième canalisation (10) joignant le filtre (9) à une partie d'aspiration du ventilateur (11) ainsi qu'un premier organe de réglage de perte de charge (12) disposé dans la première canalisation (6) relié pour sa commande à un premier moyen de régulation (13) relié pour son pilotage à un capteur de pression (14) disposé dans l'enceinte du four (2) au voisinage de l'étage d'émission (4), et des moyens d'introduction d'air additionnel dans la ligne de captage comportant un second organe de réglage de perte de charge (16), caractérisé en ce que les moyens d'introduction d'air additionnel comportent une canalisation additionnelle (15) reliée à la troisième canalisation (10) à l'une de ses extrémités et débouchant à l'air libre à son autre extrémité,
et en ce que le second organe de réglage de perte de charge (16) est disposé dans la canalisation additionnelle (15) et commandé par un second moyen de régulation (17) relié, pour son pilotage, à un capteur de pression (18) disposé dans la troisième canalisation, à proximité de la partie d'aspiration du ventilateur (11), le second moyen de régulation étant conçu pour piloter le second organe de réglage (16) de manière à maintenir la pression à l'aspiration du ventilateur, au voisinage de la pression correspondant au débit maximal dudit ventilateur (11).

3. Dispositif selon la revendication 2, caractérisé en ce que le premier organe de réglage de perte de charge (12) situé dans la première canalisation (6) reliant la hotte (5) à la chambre de combustion (7) est une vanne papillon ou une ventelle.

4. Dispositif selon la revendication 2, caractérisé en ce que le second organe de réglage de la perte de charge (16) situé dans la canalisation additionnelle (15) est une vanne papillon ou une ventelle.

5. Dispositif selon l'une quelconque des revendications 2 à 4, caractérisé en ce que le ventilateur (11) est un ventilateur centrifuge.

6. Dispositif selon l'une quelconque des revendications 2 à 5, caractérisé en ce que le moyen de régulation (13) du premier organe de réglage (12) de la perte de charge situé dans la première canalisation (6) reliant la hotte de captage (5) et la chambre de combustion (7) est conçu pour maintenir la pression à l'intérieur du four (2) au voisinage de la pression atmosphérique à l'extérieur dudit four.

## Patentansprüche

1. Verfahren zum Ansaugen von Gasen, die von einem metallurgischen Lichtbogen-Ofen ausströmen, in dessen Innenraum im Lauf der Zeit vor allem durch Schmelzen und Umwandlungsreaktionen metallurgischer Substanzen Gase in unterschiedlichen Mengen erzeugt werden, wobei der Ofenraum über eine Auffangleitung mit dem Saugabschnitt eines Pumpmittels (105) verbunden ist, wobei in dem Verfahren die Gase vom Ofen verbrannt werden, bevor die Verbrennungsrauchgase gefiltert werden, der Beschickungsmengenverlust der in den Ofen angesaugten Gase vor deren Verbrennung anhand einer Druckmessung im Ofen gesteuert wird und in die Auffangleitung für die Gase ein zusätzlicher Gasstrom eingeleitet wird, dadurch gekennzeichnet, daß der zusätzliche Luftstrom in die Auffangleitung in der Weise eingeleitet wird, daß er mit den Verbrennungsrauchgasen nach der Filterung gemischt wird, daß der Gasdruck in der Auffangleitung in der Nähe des Saugabschnitts des Pumpmittels (105), der sich in Richtung des Ausströmens der Verbrennungsrauchgase hinter der Zone für die Einleitung der zusätzlichen Luft befindet, gemessen wird und daß die Förderleistung der Einleitung der zusätzlichen Luft in der Weise gesteuert wird, daß der Gasdruck im Saugabschnitt des Pumpmittels unabhängig von der im Ofen erzeugten Gasmenge auf einem festen Wert gehalten wird, der dem Gasdruckwert entspricht, wenn das Pumpmittel (105) annähernd mit seiner maximalen Förderleistung arbeitet.

2. Auffangvorrichtung für Gase, die von einem Lichtbogenofen (2) ausströmen, der einen Raum, in dem das Schmelzen und/oder die Umwandlung einer Beschickungsmenge unter Gaserzeugung erfolgt, sowie eine Stufe (4) zum Ausströmen von Gas aus dem Ofen, die mit dem Ofenraum in Verbindung steht, enthält, wobei die Auffangvorrichtung eine Auffangleitung, die aus einer Abzughaube (5), die sich gegenüber der Ausströmstufe (4) des Ofens (2) befindet, gebildet ist, eine Verbrennungskammer (7) für die Gase, einen Filter (9), einen Ventilator (11), eine erste Rohrleitung (6), die die Abzughaube (5) mit der Verbrennungskammer (7) verbindet, eine zweite Rohrleitung (8), die die Verbrennungskammer (7) mit dem Filter (9) verbindet, sowie eine dritte Rohrleitung (10), die den Filter (9) mit einem Saugabschnitt des Ventilators (11) verbindet, und außerdem ein erstes BeschickungsmengenverlustSteuerelement (12), das in der ersten Rohrleitung (6) angeordnet ist und für seine Steuerung mit einem ersten Steuermittel (13) verbunden ist, das seinerseits für seine Steuerung mit einem Drucksensor (14) verbunden ist, der im Raum des Ofens (2) in der Nähe der Ausströmstufe (4) angeordnet ist, sowie Mittel zum Einleiten zusätzlicher Luft in die Auffangleitung enthält, die ihrerseits ein zweites Beschickungsmengenverlust-Einstellelement (16) enthalten, dadurch gekennzeichnet, daß die Mittel zum Einleiten von zusätzlicher Luft eine zusätzliche Rohrleitung (15) enthalten, die mit einem ihrer Enden mit der dritten Rohrleitung (10) verbunden ist und mit ihrem anderen Ende zur Umgebungsluft geöffnet ist,
und daß das zweite Beschickungsmengenverlust-Steuerelement (16) in der zusätzlichen Rohrleitung (15) angeordnet ist und durch ein zweites Steuermittel (17) gesteuert wird, das für seine Steuerung mit einem Drucksensor (18) verbunden ist, der in der dritten Rohrleitung in der Nähe des Saugabschnitts des Ventilators (11) angeordnet ist, wobei das zweite Steuermittel so beschaffen ist, daß es das zweite Steuerelement (16) in der Weise steuert, daß der Saugdruck des Ventilators in der Nähe des Drucks gehalten wird, der der maximalen Förderleistung des Ventilators (11) entspricht.

3. Vorrichtung nach Anspruch 2, dadurch gekennzeichnet, daß das erste Beschickungsmengenverlust-Steuerelement (12), das sich in der ersten Rohrleitung (6) befindet, die die Haube (5) mit der Verbrennungskamner (7) verbindet, ein Klappenventil oder ein Zugschütz ist.

4. Vorrichtung nach Anspruch 2, dadurch gekennzeichnet, daß das zweite Beschickungsmengenverlust-Steuerelement (16), das sich in der zusätzlichen Rohrleitung (15) befindet, ein Klappenventil oder ein Zugschütz ist.

5. Vorrichtung nach irgendeinem der Ansprüche 2 bis 4, dadurch gekennzeichnet, daß der Ventilator (11) ein Zentrifugalgebläse ist.

6. Vorrichtung nach irgendeinem der Ansprüche 2 bis 5, dadurch gekennzeichnet, daß die Steuermittel (13) des ersten Steuerelements (12) für den Ladungsverlust, das sich in der ersten Rohrleitung (6) befindet, die die Auffanghaube (5) mit der Verbrennungskammer (7) verbindet, so beschaffen ist, daß es den Druck im Innenraum des Ofens (2) in der Nähe des Atmosphärendrucks außerhalb des Ofens hält.

## Claims

1. A process for aspirating gases emitted from an electric arc metallurgical furnace, in the interior of which variable quantities of gases are produced over time, in particular by fusion and transformative reactions of metallurgical substances, the interior of the furnace being connected to the suction section of a pumping means (105) via a catchment line, in which process the gases emitted by the furnace are combusted before filtration of the smoke produced by combustion of the gases, the pressure loss of the aspirated gases is regulated in the furnace, before their combustion, starting from a pressure measurement in the furnace, and an additional stream of gas is introduced into the gas catchment line,
characterised in that the additional stream of air is introduced to the catchment line so as to mix it with the gas combustion smoke after filtration, the gas pressure is measured in the catchment line in the vicinity of the suction section of the pumping means (105), situated downstream of the additional air inlet zone in relation to the direction of flow of the combustion smoke, and the flow of additionally introduced air is regulated so that the pressure of the gas in the suction section of the pumping means is maintained at a fixed value corresponding to the value of the gas pressure when the pumping means (105) operates in the vicinity of its maximum output, whatever quantity of gas is produced in the furnace.

2. A device for capturing gases emitted by an electric arc furnace (2), comprising an interior within which fusion and/or a change in pressure is realised by the production of gas, and a gas emission stage (4) outside the furnace, in communication with the interior of the furnace, the catchment device comprising a catchment line comprising a fume hood (5) located facing the emission stage (4) of the furnace (2), a gas combustion chamber (7), a filter (9), a ventilator (11), a first conduit (6) joining the fume hood (5) and the combustion chamber (7), a second conduit (8) joining the combustion chamber (7) and the filter (9) and a third conduit (10) joining the filter (9) to an aspiration section of the ventilator (11) in the same way as a first pressure loss adjusting means (12) located in the first conduit (6) connected to and controlled by a first control means(13), which is linked to a pressure sensor (14) for its guidance, located in the interior of the furnace (2) in the vicinity of the emission stage (4), and the means for introducing additional air into the catchment line comprising a second pressure loss adjusting means (16) characterised in that the means for introducing additional air comprise an additional conduit (15) linked to the third conduit (10) at one of its ends and emerging into open air at its other end, and that the second pressure loss adjusting means (16) is located in the additional conduit (15) and is controlled by a second control means (17), linked to a pressure sensor (18) for guidance purposes, which is located in the third conduit near the aspiration section of the ventilator (11), the second control means being conceived for controlling the second adjusting means (16) so as to maintain the pressure on aspiration of the ventilator, in the vicinity of the pressure corresponding to the maximum output of said ventilator (11).

3. A device according to claim 2, characterised in that the first pressure loss adjusting means (12), located in the first conduit (6) connecting the hood (5) and the combustion chamber (7) is a butterfly valve or a "sluice valve".

4. A device according to claim 2, characterised in that the second pressure loss adjusting means (16), located in the additional conduit (15) is a butterfly valve or a "sluice valve".

5. A device according to any one of claims 2 to 4, characterised in that the ventilator (11) is a centrifugal fan.

6. A device according to any one of claims 2 to 5, characterised in that the control means(13) of the first pressure loss adjusting means (12), located in the first conduit (6), connecting the hood (5) and the combustion chamber (7), is conceived to maintain the pressure inside the furnace (2) at a level in the vicinity of the atmospheric pressure outside said furnace.
